# FASCICULE DE BREVET EUROPEEN

(11) **EP 1 616 168 B1**
(45) Date de publication et mention de la délivrance du brevet: **13.01.2010**
(21) Numéro de dépôt: 04742848.7
(22) Date de dépôt: 21.04.2004
(51) Int. Cl.: G01N 21/25, G01N 21/64, B01L 3/00

(54) **BIOPUCE A ZONES DE RECONNAISSANCE ET FORMAT OPTIQUE INDEPENDANTS ET SA LECTURE FLOTTANTE**
BIOCHIP MIT UNABHÄNGIGEN ERKENNUNGSBEREICHEN UND OPTISCHES FORMAT UND FLOAT-SCANNING DAFÜR
BIOCHIP WITH INDEPENDENT RECOGNITION AREAS AND OPTICAL FORMAT AND FLOAT SCANNING THEREOF

(30) Priorité: 23.04.2003 FR 0350124
(43) Date de publication de la demande: 18.01.2006
(73) Titulaire: COMMISSARIAT A L'ENERGIE ATOMIQUE, 75015 Paris (FR); BIOMERIEUX SA, 69280 Marcy L'Etoile (FR)
(72) Inventeur: POUTEAU, Patrick, F-38240 Meylan (FR); BEC, Daniel, F-31270 Villeneuve-Tolosane (FR); LE BRUN, Stéphane, F-31390 Carbonne (FR)
(74) Mandataire: Poulin, Gérard
(86) Numéro de dépôt international: PCT/FR2004/050162
(87) Numéro de publication internationale: WO 2004/097380

(56) Documents cités:
- WO-A-01/06395
- WO-A-98/01533
- US-A- 5 083 035
- US-A- 5 721 435
- US-B1- 6 537 801
- KUKLIN A ET AL: "HIGH THROUGHPUT SCREENING OF GENE EXPRESSION SIGNATURES" GENETICA, KLUWER ACADEMIC PRESS, DORDRECHT, NL, vol. 108, no. 1, 2000, pages 41-46, XP001095704 ISSN: 0016-6707

## Description

### DOMAINE TECHNIQUE

La présente invention concerne une biopuce comportant une pluralité de zones de reconnaissance moléculaire et des repères optiques permettant de déterminer quelles sont les zones de reconnaissance moléculaire qui sont effectivement lues.

L'invention concerne également la lecture d'une telle biopuce et en particulier son dispositif de lecture.

### ETAT DE LA TECHNIQUE ANTERIEURE

Le document FR-A-2 784 189 (correspondant au brevet américain N° 6 537 801) divulgue une biopuce comportant une pluralité de zones de reconnaissance moléculaire et un dispositif de lecture d'une telle biopuce. Il décrit en particulier un premier système mécanique permettant le balayage par une tête optique de lecture d'une biopuce présentant des repères optiques, et un asservissement de la position précise de la tête optique par ce premier système mécanique ou par un second système mécanique plus spécialisé. Cet asservissement de la position de la tête optique par rapport aux repères optiques est plus communément appelé suivi de piste (ou « tracking » en anglais) dans le domaine des disques compacts ou CD. C'est par ce système d'asservissement de la position précise de la tête optique qu'une lecture précise de la fluorescence est possible. Les motifs de repérage optique positionnés sur la biopuce peuvent se présenter sous forme de pistes.

C'est le format optique constitué par les motifs de repérage qui donne l'information de position de la lecture de fluorescence effectuée. Le format permet de repositionner en permanence la tête optique sur sa trajectoire idéale. C'est grâce au format optique qu'il est possible de savoir si l'information de fluorescence enregistrée provient de telle ou telle zone de reconnaissance. Ceci nécessite donc des motifs spécifiques pour indiquer le passage d'une zone de reconnaissance à une autre par exemple. Ceci nécessite aussi une numérotation, au moins partielle, des pistes de lecture ou bien une maîtrise absolue du saut de piste lors du balayage de la biopuce. L'information de fluorescence peut ainsi être directement enregistrée et corrélée à telle ou telle zone de reconnaissance positionnée sur la biopuce.

L'enseignement du document FR-A-2 784 189 constitue un progrès important par rapport aux techniques précédemment utilisées. Cependant, tout défaut de positionnement relatif sur la biopuce entre les zones de reconnaissance et les motifs constituant le format optique est une source d'erreur. A titre d'exemple, un défaut de positionnement de l'ensemble des zones de reconnaissance peut faire apparaître un décalage tel qu'une piste du format optique se retrouve sur la frontière entre deux zones de reconnaissance adjacentes. Ce type de défaut est problématique car il peut occasionner des erreurs de lecture en attribuant une mesure de fluorescence à l'une ou l'autre des sondes biologiques adjacentes. Ainsi, il existe une contrainte forte sur la technologie de réalisation des zones de reconnaissance en termes de positionnement sur le substrat pourvu de son format optique. Un défaut de positionnement supérieur ou égal au demi-pas des pistes de lecture, dans l'axe perpendiculaire à celui utilisé pour le suivi des pistes du format optique, nécessite obligatoirement une action corrective qui peut aboutir à la mise au rebut d'une telle biopuce.

Par ailleurs, le système d'asservissement de la position de la tête optique est complexe d'un point de vue mécanique et électronique. Un format optique spécifique doit de plus être réalisé, fonction de la taille et du pas des zones de reconnaissance.

Un dernier inconvénient de cette méthode est la limitation du pas d'échantillonnage, dans la direction perpendiculaire aux pistes, au saut de piste.

Le brevet US 5 721 435 divulgue un procédé et un dispositif de mesure des propriétés optiques de substances biologiques et chimiques. Il est proposé d'utiliser un format optique dont la postion relative est connue par rapport au format des zones de reconnaissance.

### EXPOSÉ DE L'INVENTION

La présente invention permet de remédier à ces problèmes et en particulier à tout défaut de positionnement entre le format optique et les zones de reconnaissance.

Plutôt que d'asservir en permanence la tête optique de lecture grâce aux informations fournies par les repères du format optique, comme l'enseigne le document FR-A- 2 784 189, il est prévu selon la présente invention de laisser la tête optique de lecture parcourir son chemin de balayage prédéfini sur la surface de la biopuce par son système associé et d'enregistrer simultanément les informations de fluorescence et celles de positionnement issues du format optique. Aucun asservissement ni correction de positionnement de la tête optique ne sont réalisé dans le plan de la biopuce. Par contre, une fois l'enregistrement de la fluorescence totalement ou partiellement effectué, chaque mesure est repositionnée informatiquement sur une biopuce fictive à l'aide de l'information de position enregistrée grâce au format optique pendant la mesure de fluorescence. Tout défaut de linéarité de balayage ou de régularité de balayage est alors compensé pour donner la véritable origine spatiale (sur la biopuce) de information de fluorescence enregistrée.

La solution proposée par invention est simplificatrice du point de vue du système mécanique et électronique puisqu'elle élimine tout asservissement de positionnement de la partie optique du lecteur.

Un premier objet de la présente invention consiste en une biopuce comportant une pluralité de zones de reconnaissance moléculaire utiles réparties selon un agencement déterminé pour constituer un format de zones de reconnaissance moléculaire et des moyens de repérage optique du positionnement de chaque zone de reconnaissance moléculaire, répartis selon un agencement déterminé pour constituer un format optique, **caractérisée en ce que** les zones de reconnaissance moléculaire sont disposées sur le format optique selon un positionnement relatif connu, des moyens de détermination de ce positionnement relatif étant constitués par des zones de reconnaissance moléculaire destinées à recevoir des cibles biologiques spécifiques, permettant d'obtenir une fluorescence, disposées à des endroits localisés par rapport aux zones de reconnaissance moléculaires utiles.

Ainsi, le format optique et les zones de reconnaissance moléculaire peuvent être indépendants spatialement. En particulier, ils ne sont pas nécessairement alignés l'un par rapport à l'autre.

Avantageusement, les moyens de détermination de la position relative des deux formats sont des zones de reconnaissance moléculaire destinées à recevoir des cibles biologiques spécifiques permettant d'obtenir des motifs fluorescents, ces zones de reconnaissance moléculaire destinées à recevoir des cibles biologiques spécifiques étant disposées à des endroits parfaitement localisés par rapport aux zones de reconnaissance moléculaire utiles.

De préférence, les moyens de repérage optique sont constitués d'une succession, de zones gravées et non gravées dans le substrat ou dans une couche superficielle du substrat pour un substrat composite. Ces zones gravées et non gravées peuvent constituer un damier. Les zones du damier peuvent présenter des directions obliques par rapport aux zones de reconnaissance moléculaire.

De préférence, la surface de chaque zone de reconnaissance est plus grande que la surface d'une zone gravée ou d'une zone non gravée du format optique. Elle peut par exemple correspondre à une pluralité de fois la surface d'une zone gravée.

Une couche, ou un empilement de couches minces, favorisant la réflexion d'un faisceau optique de suivi du format optique peut être disposée entre le format optique et les zones de reconnaissance moléculaire. Cette couche participe également à l'asservissement de la position de la tête optique dans la direction perpendiculaire au plan du substrat.

Un deuxième objet de la présente invention consiste en un dispositif de lecture d'une biopuce telle que définie ci-dessus, comprenant :
- une première tête optique apte à projeter sur la biopuce une première lumière incidente,
- des premiers moyens permettant d'effectuer un balayage de la biopuce par la première lumière incidente,
- une deuxième tête optique apte à projeter sur la biopuce une deuxième lumière incidente,
- des deuxièmes moyens permettant d'effectuer un balayage de la biopuce par la deuxième lumière incidente,
- un premier système optique associé à une tête optique pour projeter sur un premier capteur optoélectronique une première lumière provenant de la biopuce en relation avec la première lumière incidente et mettant en évidence la présence ou l'absence de molécules cibles sur chaque zone de reconnaissance moléculaire, le premier capteur optoélectronique étant apte à fournir des signaux correspondant à la première lumière,
- un deuxième système optique associé à une tête optique pour projeter sur un deuxième capteur optoélectronique une deuxième lumière provenant du format optique de la biopuce en relation avec la deuxième lumière incidente, le deuxième capteur optoélectronique étant apte à fournir des signaux correspondant à la deuxième lumière,
- des premiers moyens d'enregistrement d'au moins une partie des signaux correspondant à la première lumière,
- des deuxièmes moyens d'enregistrement d'au moins une partie des signaux correspondant à la deuxième lumière,
- des moyens de traitement desdits signaux pour ajuster, sur une biopuce fictive et en fonction des moyens de détermination de la position relative des deux formats, les signaux correspondant à la première lumière et les signaux correspondant à la deuxième lumière.

Avantageusement, les première et deuxième têtes optiques peuvent être confondues. Les moyens de traitement peuvent être des moyens informatiques traitant lesdits signaux au fur et à mesure de leur acquisition ou après acquisition complète sur toute la biopuce par exemple.

Le dispositif de lecture peut comporter un système mécanique, ou système d'autofocus, permettant de conserver la focalisation du faisceau de lecture à la surface de la biopuce. Ce système d'autofocus peut comprendre un actionneur piézoélectrique et des moyens d'asservissement de cet actionneur.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue de dessus d'une biopuce selon la présente invention,
- la figure 2 est une vue agrandie d'une partie de la biopuce représentée à la figure 1 et montrant des éléments constitutifs du format optique,
- la figure 3 est une vue partielle et en coupe transversale d'une biopuce selon l'invention et montrant des éléments constitutifs du format optique,
- la figure 4 est une représentation schématique simplifiée d'un dispositif de lecture conforme à l'invention,
- la figure 5 est un schéma d'un premier exemple de balayage du faisceau de lecture sur des zones de reconnaissance,
- la figure 6 est un schéma d'un deuxième exemple de balayage du faisceau de lecture sur des zones de reconnaissance,
- la figure 7 montre une répartition possible des points de lecture obtenus sur une zone de reconnaissance, grâce à la présente invention.

### EXPOSÉ DÉTAILLÉ DE MODES DE RÉALISATION PARTICULIERS

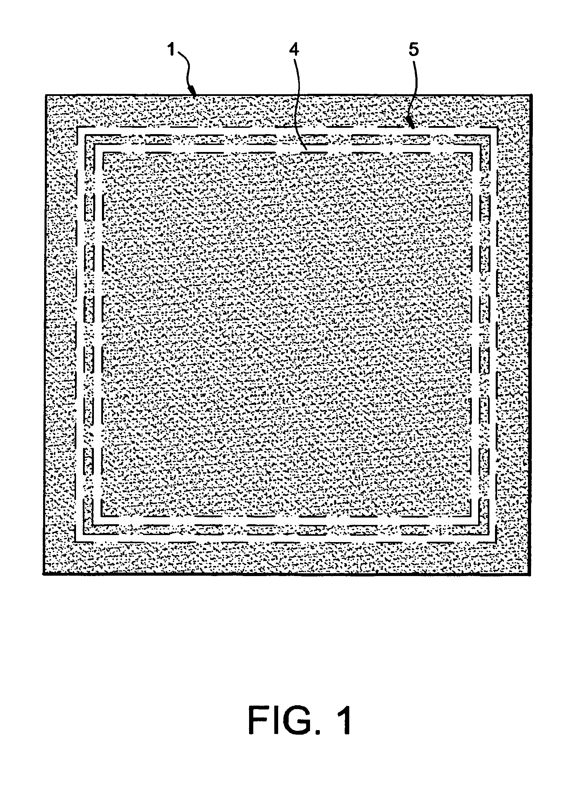

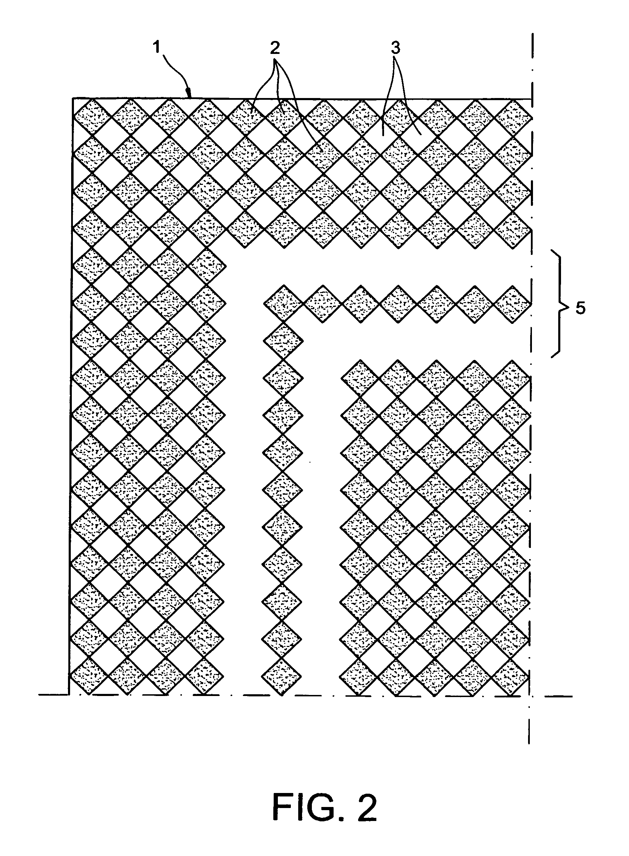

La figure 1 est une vue de dessus d'une biopuce selon la présente invention. La biopuce peut être réalisée par exemple sur une plaque de silice 1 transparente au faisceau de lecture. Les parties grisées sont des parties comportant le format optique. Beaucoup de formats optiques sont utilisables par la présente invention. Celui décrit ici n'est qu'un mode de réalisation avantageux. Le format optique va être décrit en relation avec la figure 2 qui est une vue agrandie d'une partie de la figure 1. La biopuce peut également être réalisée sur du verre ou sur un plastique transparent, la lecture se faisant au travers de la plaque. Elle peut aussi être réalisée sur un substrat non transparent, la lecture s'effectuant alors par le dessus, c'est-à-dire sans traverser le substrat.

Comme le montre plus clairement la figure 2, le format optique peut être constitué d'une matrice de zones gravées 2 et non gravées 3 par exemple en forme de losange ou de carré. Chaque diagonale d'une zone gravée ou non gravée peut avoir 5 µm de longueur.

Le format optique peut comporter une rupture 5 de façon à donner une indication de délimitation grossière de la partie où sont réalisées les zones de reconnaissance biologique et ainsi fournir, lorsque le balayage est linéaire, un point de départ pour les mesures. La zone délimitée par la zone de rupture doit avoir une dimension suffisante pour englober les zones de reconnaissance biologique quelle que soit l'imprécision de positionnement de la technique de réalisation des zones de reconnaissance biologique. La surface d'une zone gravée ou d'une zone non gravée correspond approximativement à la surface de la tache du faisceau de lecture.

Pour un substrat en silice, en silicium ou en verre, la gravure peut être réalisée par une technique de gravure RIE bien connue dans le domaine des microtechnologies. Suivant la conception de l'optique du lecteur, cette gravure peut être modifiée dans une gamme pouvant aller de 20 nm à plusieurs centaines de nanomètres. Pour un substrat en plastique, des techniques de moulage ou d'emboutissage à chaud peuvent être utilisées.

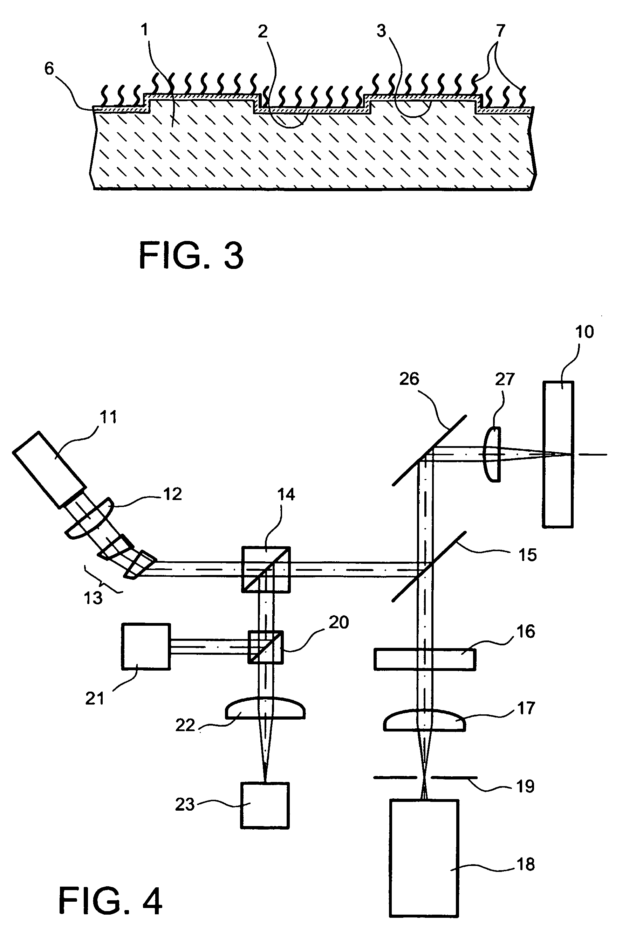

La figure 3 est une vue partielle et en coupe transversale de la biopuce des figures 1 et 2. Elle montre des zones gravées 2 et des zones non gravées 3. La coupe a été faite selon un axe correspondant à des diagonales de zones gravées et non gravées successives.

Pour assurer un fonctionnement optimal des détections de position du format optique, on dépose sur la face gravée ou plus généralement sur la face structurée de la plaque une couche optique 6 ou un empilement de couches optiques permettant d'assurer une réflectivité par exemple de l'ordre de 10% de la lumière incidente. La couche 6 peut être une couche de nitrure de silicium de l'ordre de 80 nm d'épaisseur, présentant un indice de réfraction égal à 2. D'autres matériaux avec d'autres indices peuvent être utilisés suivant la réflectivité désirée, par exemple TiO₂, Ta₂O₅, HfO₂, ZnO, MgO, SiO₂, MgF₂, YF₃, Al₂O₃, ZrO₄Ti, Y₂O₃, le diamant et les oxynitrures. Il s'agit là d'une optimisation système en fonction d'un grand nombre de paramètres : niveau de la fluorescence à mesurer, transmission de l'optique de collection, puissance du laser, nature du substrat ainsi que du milieu dans lequel se situe la biopuce, etc...

Le format optique choisi ici offre l'avantage d'être symétrique par rapport aux deux axes. Ceci garantit une précision de positionnement équivalente sur les deux axes.

La référence 7, sur la figure 3, schématise les biomolécules des zones de reconnaissance moléculaire qui sont fixées sur la couche optique 6, ces biomolécules n'étant pas représentées à l'échelle.

La figure 4 est une représentation schématique simplifiée d'un dispositif de lecture conforme à l'invention.

Le dispositif comprend un laser 11 émettant un faisceau qui est traité par une lentille de collimation 12 et un système 13 de prismes anamorphiques et de filtrage monochromatique.

Le faisceau traité passe au travers d'un cube séparateur 14 pour être réfléchi par le miroir dichroïque 15 vers un miroir 26. Le miroir 26 renvoie le faisceau laser vers la biopuce 10 après passage dans une lentille de focalisation 27. Le faisceau d'excitation traverse la biopuce 10 pour être focalisé sur la face de la biopuce opposée à la lentille 27.

La lentille de focalisation 27 recueille la lumière de fluorescence émise par les biomolécules en réponse à la lumière d'excitation et qui est dirigée vers le miroir 26 pour être réfléchie par ce miroir vers le capteur optoélectronique 18 après passage au travers du filtre passe-haut 16, de la lentille de convergence 17 et du diaphragme confocal 19.

La lentille de focalisation 27 recueille aussi la lumière d'excitation renvoyée par le format optique. Cette lumière renvoyée se réfléchit sur le miroir 26, puis sur le miroir dichroïque 15 en direction du cube séparateur 14. Elle est alors renvoyée vers un deuxième cube séparateur 20 qui réfléchit une partie de cette lumière vers la photodiode 21 et l'autre partie vers la photodiode 23 après passage au travers de la lentille de focalisation 22.

L'information fournie par la photodiode 21 contient les données relatives au format optique, qui seront traitées conjointement au signal de fluorescence.

L'information fournie par la photodiode 23 sert, quant à elle, pour l'asservissement de la position de la lentille de focalisation 27 sur l'axe optique, car il reste nécessaire de maintenir, comme pour les lecteurs CD traditionnels, un système d'autofocus. Ce système est classiquement basé sur l'asservissement d'un actionneur à commande électromagnétique. Un problème supplémentaire existe dans le cadre du balayage par aller-retour de la biopuce. En effet, il se peut que les phases de renversement du sens de déplacement s'effectuent dans des zones pour lesquelles aucun signal de réflexion n'est disponible (hors de la biopuce par exemple). Un système d'asservissement traditionnel ne peut s'en affranchir et nécessiterait une phase de recherche de focus à chaque changement de ligne en début de ligne. Pour éviter cette perte de temps, le système d'autofocus proposé permet de maintenir en position l'actionneur à la fin de chaque ligne pour reprendre la lecture en sens inverse dans la même position de focalisation que celle obtenue pour la fin de la ligne précédente. Une solution consiste par exemple à utiliser un actionneur piézo-électrique permettant un maintien en position en fin de ligne par maintien de la consigne.

Dans ce système, le format optique est éclairé en même temps que les fluorophores des biomolécules sont excités. L'éclairement du format et l'excitation des fluorophores peuvent être réalisés par des sources de lumières différentes ou identiques. Un enregistrement des deux types d'information est alors effectué pendant ce balayage. L'information des mesures de fluorescence est enregistrée en même temps que l'information issue du format optique.

Les deux enregistrements donnent lieu à la création des deux fichiers informatiques et c'est par traitement informatique que sont ensuite réalisées toutes les opérations donnant lieu à une information de lecture des biopuces. Le traitement peut mettre en oeuvre en particulier des méthodes de convolution. Ce traitement peut être effectué une fois terminée la lecture complète de la biopuce. Il peut également se dérouler au fur et à mesure des acquisitions pendant le balayage, ce qui peut permettre, entre autres, de limiter le nombre d'informations à stocker.

Avec les biopuces utilisées, le positionnement relatif des zones de reconnaissance moléculaire par rapport au format optique est connu. En effet, lors de l'hybridation des cibles biologiques marqués, certaines cibles spécifiques ont été introduites. Ces cibles spécifiques permettent d'obtenir des motifs fluorescents à des endroits spécifiques et prédéfinis de la biopuce, par exemple aux quatre coins de la partie située à l'intérieur de la zone 5 (voir la figure 1). Ces motifs fluorescents servent de repères et permettent de connaître la position relative du format optique par rapport aux positions des zones de reconnaissance moléculaire. Les endroits spécifiques peuvent être des matrices de 4 zones sur 4 zones, chaque zone possédant 30 µm de côté et une zone sur deux possédant des sondes biologiques aptes à recevoir des cibles spécifiques (zones de reconnaissance spécifiques). Bien entendu, la taille des motifs peut être plus grande ou plus petite. Ces zones de reconnaissance spécifiques peuvent être disposées aléatoirement ou non dans le motif. Elles peuvent être également d'intensités différentes.

Les positions des zones de reconnaissance sont déterminées de manière sûre par leur technique de réalisation, par exemple au moyen de masques de photolithographie. Ainsi, on connaît la position relative du format de zones de reconnaissance et du format optique. Chaque mesure de fluorescence étant corrélée à une information de position, on peut par un traitement informatique repositionner cette mesure par rapport aux positions réelles des zones de reconnaissance.

Ce système n'oblique pas un positionnement parfait sur la biopuce des zones de reconnaissance par rapport aux motifs constituant le format optique. Il n'impose pas non plus obligatoirement une lecture régulière et homogène de chaque zone de reconnaissance moléculaire. Ainsi, un nombre important de lecture par zone de reconnaissance permet de donner une mesure tout autant fiable de la valeur de fluorescence d'une sonde biologique qu'une lecture régulière et homogène.

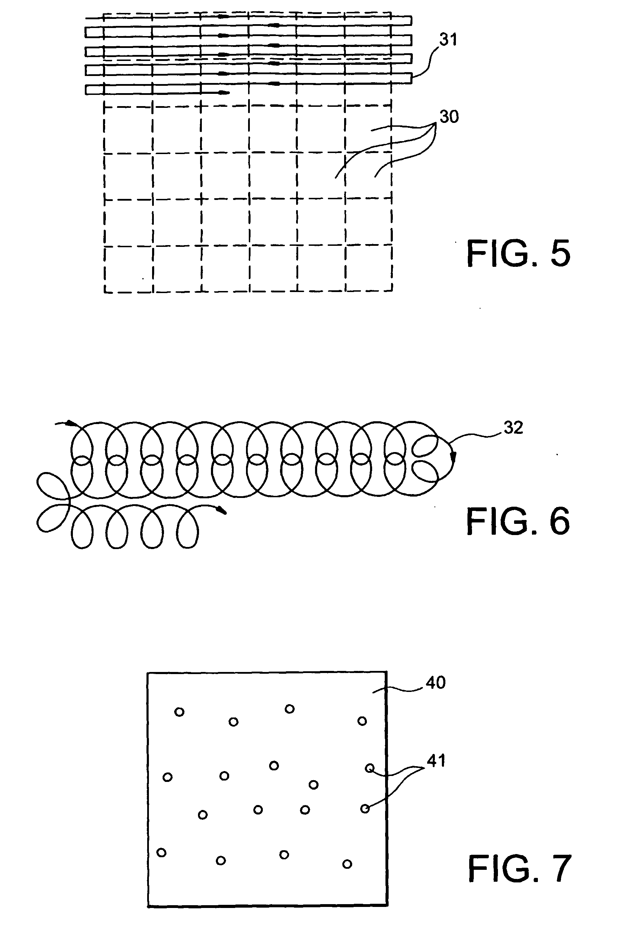

La figure 5 est un schéma d'un premier exemple de balayage du faisceau de lecture sur des zones de reconnaissance. Le schéma de la figure 5 montre une matrice de 6 x 6 zones de reconnaissance moléculaire 30. La référence 31 représente le balayage du faisceau de lecture sur la biopuce. Chaque zone de reconnaissance moléculaire a par exemple une dimension de 30 µm x 30 µm. Le balayage s'effectue en lignes aller et retour.

D'autres méthodes de balayages peuvent être utilisées pour mieux couvrir l'ensemble de la surface ou mieux s'accorder avec un système mécanique fiable. La méthode aller-retour pose le problème du ralentissement et du changement de sens au niveau de la mécanique. La figure 6 représente un deuxième exemple de balayage possible. Le balayage 32 est en spirale, ce qui évite les ralentissements.

La figure 7 montre une répartition possible des points de lecture 41 obtenus sur une zone de reconnaissance moléculaire 40 grâce à la présente invention.

## Revendications

1. Biopuce comportant une pluralité de zones de reconnaissance moléculaire utiles réparties selon un agencement déterminé pour constituer un format de zones de reconnaissance moléculaire et des moyens de repérage optique du positionnement de chaque zone de reconnaissance moléculaire (30) répartis selon un agencement déterminé pour constituer un format optique (2, 3, 5), et
les zones de reconnaissance moléculaire utiles sont disposées sur le format optique (2, 3) selon un positionnement relatif connu,
**caractérisée en ce qu'**elle comprend
des moyens de détermination de ce positionnement relatif tant constitués par des zones de reconnaissance moléculaire destinées à recevoir des cibles biologiques spécifiques disposées à des endroits spécifiques et prédéfinis de la biopuce par rapport aux zones de reconnaissance moléculaires utiles,
lesdits moyens permettant d'obtenir une fluorescence de ces cibles biologiques spécifiques.

2. Biopuce selon revendication 1 **caractérisée en ce que** les moyens de repérage optique sont constitués d'une succession de zones gravées (2) et non gravées (3),

3. Biopuce selon la revendication 2, **caractérisée en ce que** les zones gravées (2) et non gravées (3) constituent un damier.

4. Biopuce selon la revendication 3, **caractérisée en ce que** les zones du damier présentent des directions obliques par rapport aux zones de reconnaissance moléculaire.

5. Biopuce selon l'une quelconque des revendications 2 à 4, **caractérisée en ce que** la surface de chaque zone de reconnaissance est plus grande que la surface d'une zone gravée ou d'une zone non gravée du format optique.

6. Biopuce selon la revendication 1, **caractérisée en ce qu'**une couche, ou un empilement de couches minces, favorisant la réflexion d'un faisceau optique de suivi du format optique est disposée entre le format optique et les zones de reconnaissance moléculaire.

7. Dispositif de lecture d'une biopuce (10) telle que définie dans la revendication 1, comprenant :
- une première tête optique apte à projeter sur la biopuce une première lumière incidente,
- des premiers moyens permettant d'effectuer un balayage de la biopuce par la première lumière incidente,
- une deuxième tête optique apte à projeter sur la biopuce une deuxième lumière incidente,
- des deuxièmes moyens permettant d'effectuer un balayage de la biopuce par la deuxième lumière incidente,
- un premier système optique associé à une tête optique pour projeter sur un premier capteur optoélectronique une première lumière provenant de la biopuce en relation avec la première lumière incidente et mettant en évidence la présence ou l'absence de molécules cibles sur chaque zone de reconnaissance moléculaire, le premier capteur optoélectronique étant apte à fournir des signaux correspondant à la première lumière,
- un deuxième système optique associé à une tête optique pour projeter sur un deuxième capteur optoélectronique une deuxième lumière provenant du format optique de la biopuce en relation avec la deuxième lumière incidente, le deuxième capteur optoélectronique étant apte à fournir des signaux correspondant à la deuxième lumière,
- des premiers moyens d'enregistrement d'au moins une partie des signaux correspondant à la première lumière,
- des deuxièmes moyens d'enregistrement d'au moins une partie des signaux correspondant à la deuxième lumière,
- des moyens de traitement desdits signaux pour ajuster, sur une biopuce fictive et en fonction des moyens de détermination de la position relative des deux formats, les signaux correspondant à la première lumière et les signaux correspondant à la deuxième lumière.

8. Dispositif selon la revendication 7, **caractérisé en ce que** la première tête optique et la deuxième tête optique sont confondues.

9. Dispositif selon l'une des revendications 7 ou 8, **caractérisé en ce qu'**il comporte un système mécanique, ou système autofocus, permettant de conserver la focalisation du faisceaux de lecture à la surface de la biopuce.

10. Dispositif selon la revendication 9, **caractérisé en ce que** le système d'autofocus comprend un actionneur piézoélectrique et des moyens d'asservissement de cet actionneur.

## Claims

1. Biochip comprising a plurality of useful molecular recognition areas distributed with a determined layout to create a format of molecular recognition areas and means for making optical position marks for each molecular recognition area (30), distributed with a determined layout to form an optical format (2, 3, 5), and
the useful molecular recognition areas are arranged on the optical format (2, 3) according to a known relative positioning,
**characterised in that** it comprises means for determining said known relative positioning constituted by molecular recognition areas configured to receive specific biological targets arranged at specific and predefined locations of the biochip with respect to useful molecular recognition areas, said means allowing to obtain fluorescence of these specific biological targets.

2. Biochip according to claim 1, **characterised in that** the optical marking means consist of a sequence of engraved areas (2) and non-engraved engraved (3).

3. Biochip according to claim 2, **characterised in that** the engraved areas (2) and non-engraved areas (3) form a checker board.

4. Biochip according to claim 3, **characterised in that** the areas of the checker board are oblique with respect to the molecular recognition areas.

5. Biochip according to any one of claims 2 to 4, **characterised in that** the surface area of each recognition area is greater than the surface area of an engraved area or a non-engraved area of the optical format.

6. Biochip according to claim 1, **characterised in that** a layer or a stack of thin layers, facilitating reflection of an optical format tracking beam, is arranged between the optical format and the molecular recognition areas.

7. Device for reading a biochip (10) like that defined in claim 1, comprising:
- a first optical head capable of projecting first incident light onto the biochip,
- first means for scanning the biochip by the first incident light,
- a second optical head capable of projecting second incident light on the biochip,
- second means for scanning the biochip by the second incident light,
- a first optical system associated with an optical head to project first light originating from the biochip and related to the first incident light onto a first optoelectronic sensor, demonstrating the presence or absence of target molecules on each molecular recognition area, the first optoelectronic sensor being capable of supplying signals corresponding to the first light,
- a second optical system associated with an optical head to project second light originating from the optical format of the biochip and related to the second incident light onto a second optoelectronic sensor, the second optoelectronic sensor being capable of supplying signals corresponding to the second light,
- first means for recording at least part of the signals corresponding to the first light,
- second means for recording at least part of the signals corresponding to the second light,
- means for processing said signals to adjust the signals corresponding to the first light and signals corresponding to the second light, on a fictitious biochip as a function of means of determining the relative position of the two formats.

8. Device according to claim 7, **characterised in that** the first and second optical heads are coincident.

9. Device according to either claim 7 or 8, **characterised in that** it comprises a mechanical system or an autofocus system to maintain the focus of the reading beam on the surface of the biochip.

10. Device according to claim 9, **characterised in that** the autofocus system includes a piezoelectric actuator and means for slaving this actuator.

## Patentansprüche

1. Biochip mit einer Vielzahl von Molekularerkennungs-Nutzbereichen, verteilt gemäß einer bestimmten Anordnung um ein Molekularerkennungsbereichsformat zu bilden, und Mittel zur optischen Kennzeichnung der Positionierung jedes Molekularerkennungsbereichs (30), verteilt gemäß einer bestimmten Anordnung, um ein optisches Format (2, 3, 5) zu bilden,
wobei die Molekularerkennungs-Nutzbereiche auf dem optischen Format (2, 3) gemäß einer bekannten Relativpositionierung angeordnet sind,
**dadurch gekennzeichnet, dass** er umfasst:
Mittel zur Bestimmung dieser Relativpositionierung, so gebildet durch Molekularerkennungsbereiche, die dazu bestimmt sind, spezifische biologische Targets aufzunehmen, angeordnet auf spezifischen und vorbestimmten Plätzen des Biochips in Bezug auf die Molekularerkennungs-Nutzbereiche,
wobei die genannten Mittel ermöglichten, eine Fluoreszenz dieser spezifischen biologischen Targets zu bewirken.

2. Biochip nach Anspruch 1, **dadurch gekennzeichnet, dass** die optische Kennzeichnungsmittel durch eine Folge geätzter (2) und ungeätzter (3) Bereiche gebildet werden.

3. Biochip nach Anspruch 2, **dadurch gekennzeichnet, dass** die geätzten (2) und ungeätzten (3) Bereiche ein Schachbrettmuster bilden.

4. Biochip nach Anspruch 3, **dadurch gekennzeichnet, dass** die Bereiche des Schachbrettmusters schräge Richtungen aufweisen in Bezug auf die Molekularerkennungsbereiche.

5. Biochip nach einem der Ansprüche 2 bis 4, **dadurch gekennzeichnet, dass** die Oberfläche jedes Erkennungsbereichs größer ist als die Oberfläche eines geätzten Bereichs oder eines ungeätzten Bereichs des optischen Formats.

6. Biochip nach Anspruch 1, **dadurch gekennzeichnet, dass** sich zwischen dem optischen Format und den Malekularerkennungsbereichen eine Schicht oder ein Dünnschichtenstapel befindet, der die Reflexion eines optischen Trackingstrahls des optischen Formats begünstigt.

7. Lesevorrichtung für einen Biochip (10) wie definiert in Anspruch 1, umfassend:
- einen ersten optischen Kopf, fähig ein erstes einfallendes Licht auf den Biochip zu projizieren,
- erste Einrichtungen, die ermöglichen, den Biochip mit dem ersten einfallenden Licht abzutasten,
- einen zweiten optischen Kopf, fähig ein zweites einfallendes Licht auf den Biochip zu projizieren,
- zweite Einrichtungen, die ermäglichen, den Biochip mit dem zweiten einfallenden Licht abzutasten,
- ein erstes optisches System, verbunden mit einem optischen Kopf, um ein von dem Biochip in Verbindung mit dem ersten einfallenden Licht stammendes erstes Licht auf einen ersten optoelektronischen Sensor zu projizieren und das Vorhandensein oder Nichtvorhandensein von Target-Molekülen in jedem Molekularerkennungsbereich nachzuweisen, wobei der erste optoelektronische Sensor fähig ist, dem ersten Licht entsprechende Signale zu liefern,
- ein zweites optisches System, verbunden mit einem optischen Kopf, um ein von dem Biochip in Verbindung mit dem zweiten einfallenden Licht stammendes zweites Licht auf einen zweiten optoelektronischen Sensor zu projizieren, wobei der zweite optoelektronische Sensor fähig ist, dem zweiten Licht entsprechende Signale zu liefern,
- erste Aufzeichnungseinrichtungen wenigstens eines Teiles der dem ersten Licht entsprechenden Signale,
- zweite Aufzeichnungseinrichtungen wenigstens eines Teils der dem zweiten Licht entsprechenden Signale,
- Verarbeitungseinrichtungen der genannten Signale, um - auf einem fiktiven Biochip und in Abhängigkeit von den Mitteln zur Bestimmung der Relativpositionierung der beiden Formate - die dem ersten Licht entsprechenden Signale und die dem zweiten Licht entsprechenden Signale zu adjustieren.

8. Vorrichtung nach Anspruch 7, **dadurch gekennzeichnet, dass** der erste optische Kopf und der zweite optische Kopf vereinigt sind.

9. Vorrichtung nach einem der Ansprüche 7 oder 8, **dadurch gekennzeichnet, dass** sie ein mechanisches System, oder Autofokussierungssystem, umfasst, das ermöglicht, die Fokussierung des Lesestrahls auf der Oberfläche des Biochips beizubehalten.

10. Vorrichtung nach Anspruch 9, **dadurch gekennzeichnet, dass** das Autofokussierungssystem einen piezoelektrischen Aktor und Steuerungseinrichtungen dieses Aktors umfasst.
